(19) Europäisches Patentamt
European Patent Office
Office européen des brevets

(11) **EP 2 425 321 B1**

(12) **EUROPÄISCHE PATENTSCHRIFT**

(45) Veröffentlichungstag und Bekanntmachung des Hinweises auf die Patenterteilung:
**11.06.2014 Patentblatt 2014/24**

(21) Anmeldenummer: **10719311.2**

(22) Anmeldetag: **28.04.2010**

(51) Int Cl.:
*G06F 3/048* ^(2013.01)    *B60K 35/00* ^(2006.01)

(86) Internationale Anmeldenummer:
**PCT/EP2010/055749**

(87) Internationale Veröffentlichungsnummer:
**WO 2010/125119 (04.11.2010 Gazette 2010/44)**

(54) **VERFAHREN UND VORRICHTUNG ZUM ANZEIGEN VON IN LISTEN GEORDNETER INFORMATION**

METHOD AND DEVICE FOR DISPLAYING INFORMATION SORTED IN LISTS

PROCÉDÉ ET DISPOSITIF POUR AFFICHER DE L'INFORMATION RANGÉE DANS DES LISTES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.04.2009 DE 102009019563**

(43) Veröffentlichungstag der Anmeldung:
**07.03.2012 Patentblatt 2012/10**

(73) Patentinhaber: **Volkswagen Aktiengesellschaft 38440 Wolfsburg (DE)**

(72) Erfinder:
• **HAUSCHILD, Frank 10587 Berlin (DE)**

• **KUHN, Mathias 14129 Berlin (DE)**
• **DEHMANN, Rainer 10961 Berlin (DE)**

(74) Vertreter: **Reitstötter - Kinzebach Patentanwälte Sternwartstrasse 4 81679 München (DE)**

(56) Entgegenhaltungen:
**EP-A2- 1 729 207    DE-A1-102007 034 272**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Anzeigen von in Listen geordneter Information, bei dem auf einer Anzeigefläche eine Teilmenge einer Liste angezeigt wird, die eine Vielzahl von Listeneinträgen umfasst, wobei den Listeneinträgen jeweils mehrere Elemente zugeordnet sind, die angezeigte Teilmenge der Liste durch einen Bildlauf-Bedienvorgang veränderbar ist, so dass nacheinander vorhergehende oder nachfolgende Listeneinträge anzeigbar sind, und bei einer Auswahl eines Listeneintrags, dieser Listeneintrag zusammen mit zumindest einer Teilmenge angezeigt wird, welche Elemente enthält, die dem Listeneintrag zugeordnet sind. Des Weiteren betrifft die Erfindung eine Vorrichtung zum Anzeigen in Listen geordneter Information mit einer Anzeigevorrichtung mit einer Anzeigefläche. Ferner umfasst die Vorrichtung einen Speicher zum Speichern einer Liste, die eine Vielzahl von Listeneinträgen umfasst, von der eine Teilmenge auf der Anzeigefläche anzeigbar ist, und zum Speichern von Elementen, die den Listeneinträgen zugeordnet sind Des Weiteren umfasst die Vorrichtung eine Bedieneinrichtung, die von einem Nutzer betätigbar ist, um die angezeigte Teilmenge der Liste durch einen Bildlauf-Bedienvorgang zu verändern, wobei durch den Bildlauf-Bedienvorgang die Listeneinträge der Liste nacheinander durchlaufen werden, und eine Steuervorrichtung, die mit der Bedieneinrichtung und der Anzeigevorrichtung gekoppelt ist und mit welcher die auf der Anzeigefläche wiedergegebene Anzeige steuerbar ist.

In einem Fahrzeug werden herkömmlicherweise verschiedene Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des so genannten Kombiinstruments in der Nähe des primären Sichtfelds des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Die Multifunktionsanzeigen werden in Verbindung mit einem Bediensystem betrieben, welches verschiedene Bedienelemente umfassen kann. In der DE 199 41 956 A1 sind z. B. mehrere Auswahl- und Funktionstasten zur Ansteuerung der Fahrzeugeinrichtungen vorgesehen. In der DE 199 41 960 A1 ist andererseits ein Multifunktionsbedienelement zur Auswahl von Funktionsgruppen und individuellen Funktionen beschrieben, das einen bidirektional drehbaren Zylinder umfasst, der ferner senkrecht zur Rotationsachse bewegbar ist.

Des Weiteren ist aus der EP 0 366 132 B1 eine Multifunktionsbedieneinrichtung bekannt, bei der die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 ist eine Multifunktionsbedienvorrichtung bekannt, die einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Ferner ist aus der DE 10 2007 034 272 A1 eine Anzeige- und Bedienvorrichtung für ein Kraftfahrzeug mit einer Multi-View-Anzeigevorrichtung bekannt. Mittels dieser Multi-View-Anzeigevorrichtung werden zeitgleich zwei unterschiedliche Darstellungen für eine Betrachtung aus unterschiedlichen Betrachtungswinkelbereichen angezeigt. Mit der Bedienvorrichtung können Nutzereingaben erfasst werden und eine Detektionseinheit detektiert eine Annäherung eines Betätigungselements an die Bedienvorrichtung. Dabei wird das Betätigungselement einem Betrachtungswinkelbereich zugeordnet, so dass eine mittels der Bedienvorrichtung erfasste Betätigungshandlung des Betätigungselements ebenfalls einem der unterschiedlichen Betrachtungswinkelbereiche zugeordnet werden kann.

Neben den vorstehend beschriebenen abgesetzten Bedienelementen wurde ferner vorgeschlagen, das Display selbst mit einer berührungsempfindlichen Oberfläche auszustatten und auf diese Weise einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung wird erfasst, ausgewertet und einem Bedienschritt zugeordnet. Um den Nutzer bei der Bedienung zu unterstützen, können auf dem Display virtuelle Schalter als graphische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Die Darstellung von Information in einem Fahrzeug erfolgt vielfach dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen. Bei dem Bedienvorgang kann der Nutzer beispielsweise eine Bedienbewegung einer bestimmten Länge ausführen. Ferner kann der Nutzer beispielsweise ein Bedienelement für eine bestimmte Bediendauer betätigen. Die Größe bzw. das Maß der Veränderung der angezeigten Information, d. h. in diesem Fall die Anzahl der Positionen, um die sich die Listeneinträge, die angezeigt werden, verändern, hängt in diesem Fall von der Länge der Bedienbewegung bzw. der Bediendauer ab. Ferner hängt die Größe dieser Veränderung von dem Vergrößerungsfaktor ab, mit welchem die Liste dargestellt wird. Werden nämlich in einem bestimmten Anzeigebereich z. B. vier Listeneinträge wiedergegeben, ist die Veränderung der angezeigten Information bei einer bestimmten Länge der Bedienbewegung bzw. einer bestimmten Bediendauer kleiner als bei dem Fall, bei dem für den Bedienvorgang sechs Listeneinträge in dem entsprechenden Anzeigebereich wiedergegeben werden. Insbesondere wenn die Länge einer Bedienbewegung bestimmt, wie groß die Veränderung der Liste ist, ist der Bedienvorgang für den Nutzer besonders intuitiv, da die dargestellte Liste durch die Bedienbewegung in eine bestimmte Richtung bewegt wird, wobei bei einem größeren Vergrößerungsfaktor sich die Position der angezeigten Listeneinträge weniger verändert als bei einem kleineren Vergrößerungsfaktor.

Es wird darauf hingewiesen, dass sich der Vergrößerungsfaktor auf einen beliebig wählbaren Grunddarstellungsmaßstab bezieht. Der Vergrößerungsfaktor kann größer als, kleiner als oder gleich eins sein, so dass er auch Verkleinerungen relativ zu dem Grundmaßstab umfasst.

Aus der EP 1 729 207 A2 mit den Merkmalen des Oberbegriffs des Ansprüche 1 und 8 ist ein System und ein Verfahren zum Navigieren in einem Anzeigeinhalt bekannt. Von der Vorrichtung wird auch in Listen geordnete Information angezeigt, wobei der Nutzer die Listeneinträge auswählen kann und innerhalb der Listeneinträge navigieren kann.

Umfasst die Gesamtinformation eine sehr große Datenmenge wie z. B. eine sehr lange Liste mit vielen Listeneinträgen, ergibt sich das Problem, dass der Bedienvorgang für einen Bildlauf zu sehr entfernt liegenden Listeneinträgen ein hohes Maß an Zeit und Aufmerksamkeit vom Nutzer abverlangt. Dies ist jedoch, wie vorstehend erläutert, bei der Anwendung in einem Fahrzeug nachteilig.

Falls ein Listeneintrag ausgewählt wird, um sich die dem Listeneintrag zugeordneten Elemente anzeigen zu lassen, wechselt die angezeigte Information in eine tiefere Hierarchieebene und zeigt die Elemente erneut in einer Liste an. Reicht die Anzeigefläche nicht aus, alle Elemente anzuzeigen, wird erneut nur eine Teilmenge der Elemente angezeigt. Durch einen Bildlauf-Bedienvorgang kann der Nutzer die angezeigte Teilmenge der Elemente verändern. Will der Nutzer einen anderen Listeneintrag auswählen, muss er üblicherweise zunächst zurück zu der Liste mit den Listeneinträgen navigieren und daraufhin den gewünschten Listeintrag auswählen. Die Auswahl eines anderen Listeneintrags erfordert daher mehrere Bedienschritte. Auch in diesem Fall ergibt sich somit das Problem, dass die Bedienung ein hohes Maß an Zeit und Aufmerksamkeit vom Nutzer abverlangt, was bei der Anwendung in einem Fahrzeug nachteilig ist.

Es ist daher die Aufgabe der vorliegenden Erfindung, ein Verfahren und eine Vorrichtung der eingangs genannten Art bereitzustellen, bei denen einfach und schnell verschiedene Listeneinträge ausgewählt werden können, selbst wenn die zu einem Listeneintrag gehörigen Elemente angezeigt werden.

Diese Aufgabe wird erfindungsgemäß durch ein Verfahren mit den Merkmalen des Anspruchs 1 und eine Vorrichtung mit den Merkmalen des Anspruchs 8 gelöst. Vorteilhafte Aus- und Weiterbildungen ergeben sich aus den abhängigen Ansprüchen.

Das erfindungsgemäße Verfahren ist dadurch gekennzeichnet, dass, wenn ein ausgewählter Listeneintrag zusammen mit zumindest einer Teilmenge der dem ausgewählten Listeneintrag zugeordneten Elemente angezeigt wird und der Bildlauf-Bedienvorgang ausgeführt wird, zunächst nacheinander vorhergehende oder nachfolgende Elemente angezeigt werden und danach zu dem ausgewählten Listeneintrag vorhergehende oder nachfolgende Listeneinträge angezeigt werden. Bei dem erfindungsgemäßen Verfahren muss der Nutzer somit nicht zurück zu der Liste mit den Listeneinträgen navigieren, um einen anderen Listeneintrag auswählen zu können, wenn die Elemente eines zuvor ausgewählten Listeneintrags angezeigt werden. Die Elemente eines ausgewählten Listeneintrags werden vielmehr in die Liste mit den Listeneinträgen eingefügt, so dass durch den Bildlauf-Bedienvorgang direkt andere Listeneinträge zur Anzeige gebracht und anschließend ausgewählt werden können. Auf diese Weise kann der Nutzer einfacher und schneller andere Listeneinträge zur Anzeige bringen und auswählen.

Gemäß einer bevorzugten Ausgestaltung des erfindungsgemäßen Verfahrens werden die Listeneinträge und/oder die Elemente in einer linearen Darstellung aufeinander folgend angezeigt. Die Listeneinträge bzw. die Elemente werden insbesondere in der Fläche übereinander oder nebeneinander angezeigt.

Wenn zu einem ausgewählten Listeneintrag die diesem Listeneintrag zugeordnete Elemente angezeigt werden und bei dieser Anzeige ein Bildlauf-Bedienvorgang ausgeführt wird, wird nach dem letzten Element des ausgewählten Listeneintrags der dem ausgewählten Listeneintrag nachfolgende Listeneintrag angezeigt.

Gemäß einer weiteren Ausgestaltung des erfindungsgemäßen Verfahrens wird ausgehend von einer Anzeige, bei welcher ein ausgewählter Listeneintrag zusammen mit zumindest einer Teilmenge der dem ausgewählten Listeneintrag zugeordneten Elemente angezeigt wird und anschließend ein anderer Listeneintrag ausgewählt wird, der andere Listeneintrag zusammen mit zumindest einer Teilmenge der dem anderen Listeneintrag zugeordneten Elemente angezeigt. In diesem Fall werden die Elemente des zuvor ausgewählten Listeneintrags nicht mehr angezeigt. Auf diese Weise wird für den Bildlauf-Bedienvorgang sichergestellt, dass der Nutzer allenfalls die Elemente eines einzigen Listeneintrags durchlaufen muss und nicht die Elemente von Listeneinträgen, die zu vorher ausgewählten Listeneinträgen gehören. Hierdurch wird der Bildlauf durch die Liste mit den Listeneinträgen und den Elementen beschleunigt, so dass der Nutzer schneller zu anderen Listeneinträgen gelangen kann.

Durch den bei dem erfindungsgemäßen Verfahren durchgeführten Bildlauf-Bedienvorgang scrollt man durch die Listeneinträge und/oder die Elemente eines ausgewählten Listeneintrags.

Gemäß einer weiteren Ausgestaltung des erfindungsgemäßen Verfahrens hängt die Anzahl der angezeigten Listeneinträge und/oder Elemente von einem Vergrößerungsfaktor ab, mit dem die Listeneinträge und/oder Elemente auf der Anzeigefläche angezeigt werden. Die Größe einer Veränderung der angezeigten Information hängt dabei bei dem Bildlauf-Bedienvorgang hängt dabei von dem Vergrößerungsfaktor der angezeigten Information ab. Gemäß der Ausgestaltung des erfindungsgemäßen Verfahrens verändert sich der Vergrößerungsfaktor für den Bedienvorgang in Abhängigkeit von einer Bediensituation. Der Vergrößerungsfaktor wird insbesondere verkleinert, so dass sich eine stärkere Veränderung der angezeigten Information bei einem ansonsten gleichen Bedienvorgang, d. h. insbesondere bei gleicher Länge der Bedienbewegung bzw. gleicher Bediendauer, ergibt.

Die Größe der Veränderung der angezeigten Information ist insbesondere mit der Geschwindigkeit der Veränderung der angezeigten Teilmenge der Listeneinträge bzw. Elemente korreliert. Bei einem kleinen Vergrößerungsfaktor, d. h. einer kleineren Darstellung einer bestimmten Informationsmenge, wird diese bei dem Bedienvorgang stärker bzw. schneller verändert als bei einem größeren Vergrößerungsfaktor, d. h. bei einer größeren Darstellung einer bestimmten Informationsmenge bei dem gleichen Bedienvorgang. Bei dem erfindungsgemäßen Verfahren kann die angezeigte Teilmenge der Listeneinträge bzw. Elemente somit dadurch schneller verändert werden, dass durch die Bediensituation automatisch für den Bedienvorgang der Vergrößerungsfaktor der angezeigten Information verkleinert wird.

Bei herkömmlichen Bedienvorgängen ist die Geschwindigkeit, mit der sich die angezeigte Teilmenge der Gesamtinformation auf eine Eingabe eines Nutzers ändert, konstant. Ferner ist es möglich, dass der Nutzer die Geschwindigkeit erhöhen kann, indem er eine Bedieneinrichtung für eine gewisse Zeit dauerhaft und ununterbrochen betätigt. Diese Art und Weise die Geschwindigkeit, mit der sich die angezeigte Teilmenge ändert, zu erhöhen, ist insbesondere bei einem Einsatz in einem Fahrzeug nachteilig, da sich die Bediendauer und damit die Ablenkungsgefahr für einen Fahrer, der die Bedieneinrichtung hierfür betätigt, erhöht. Zudem erschweren im Fahrzeug auftretende Erschütterungen und Vibrationen die ununterbrochene Betätigung der Bedieneinrichtung, so dass die Gefahr besteht, dass der Bedienvorgang ungewollt unterbrochen wird.

Bei dem erfindungsgemäßen Verfahren kann der Nutzer die Geschwindigkeit, mit der sich die angezeigte Teilmenge ändert, durch eine Bediensituation verändern, die dazu führt, dass sich der Vergrößerungsfaktor für den Bedienvorgang verändert, insbesondere verkleinert, so dass die Geschwindigkeit erhöht wird. Hierdurch kann somit die Bediendauer erheblich verkürzt werden. Dies liefert einen Beitrag zum sicheren Führen des Fahrzeugs.

Es wird darauf hingewiesen, dass sich der Bedienvorgang selbst nicht auf eine Veränderung des Vergrößerungsfaktors, der auf der Anzeigefläche angezeigten Information, bezieht. Der Vergrößerungsfaktor wird nur *für* den Bedienvorgang verändert, der sich ansonsten auf den Bildlauf in der Liste bezieht. Die Veränderung des Vergrößerungsfaktors ist somit ein Hilfsmittel schneller die Listeneinträge bzw. die Elemente durchlaufen zu können. Daher wird insbesondere bei Beendigung des Bedienvorgangs, d. h. nach dem Ende des Bildlaufs, der Vergrößerungsfaktor wieder auf den ursprünglichen Wert zurückgesetzt. Der Bedienvorgang führt somit nicht zu einer anderen Darstellungsart nach Beendigung des Bildlaufs.

Diese Ausgestaltung des erfindungsgemäßen Verfahrens liefert somit den Vorteil, dass bei einem Durchlaufen einer langen Liste die Listendarstellung in Abhängigkeit von der Bediensituation verkleinert wird, so dass auf einer bestimmten Anzeigefläche deutlich mehr Listeneinträge angezeigt werden. Die Bedienbewegung bzw. die Bediendauer des Bedienvorgangs führen somit dazu, dass die Liste schneller durchlaufen wird, bzw. die Größe der Veränderung der angezeigten Information pro Zeiteinheit stärkerverändert wird.

Die Größe der Veränderung des Vergrößerungsfaktors kann entweder fest vorgegeben sein oder auch von der Bediensituation abhängen. Ferner ist es möglich, dass der Vergrößerungsfaktor stufenlos verändert wird. Ferner kann der Vergrößerungsfaktor in Stufen verändert werden.

Gemäß einer Ausgestaltung des erfindungsgemäßen Verfahrens wird die Bediensituation durch den Bedienvorgang bestimmt. Für den Bedienvorgang kann beispielsweise eine Oberfläche der Anzeigefläche oder eine Oberfläche einer Bedieneinrichtung berührungsempfindlich sein. In diesem Fall wird beim Bedienvorgang die berührungsempfindliche Oberfläche betätigt. Die Anzeigefläche ist somit Teil eines Touchscreens oder die Oberfläche der Bedieneinrichtung Teil eines Touchpads. Der Bedienvorgang wird dadurch ausgeführt, dass der Nutzer beispielsweise mit seiner Fingerspitze die berührungsempfindliche Oberfläche der Anzeigefläche oder der Bedieneinrichtung bei einer bestimmten Position berührt bzw. eine bestimmte Bewegung auf der berührungsempfindlichen Oberfläche ausführt.

Des Weiteren kann die berührungsempfindliche Oberfläche der Anzeigefläche oder der Bedieneinrichtung so ausgebildet sein, dass mit ihr die gleichzeitige Berührung bei verschiedenen Bereichen detektierbar ist (so genannter Multi-Touchscreen/Touchpad). In diesem Fall kann der Bedienvorgang und/oder die von dem Bedienvorgang bestimmte Bediensituation eine auf der berührungsempfindlichen Oberfläche ausgeführte Geste sein, bei der die Oberfläche der Anzeigefläche oder der Bedieneinrichtung gleichzeitig bei zumindest zwei abgrenzbaren Bereichen berührt wird. Bei der Geste kann für die beiden Bereiche auch eine Bewegung ausgeführt werden. Beispielsweise können zwei Fingerspitzen in einer bestimmten Art und Weise über die Oberfläche der Anzeigefläche oder der Bedieneinrichtung geführt werden.

Gemäß einer weiteren Ausgestaltung des erfindungsgemäßen Verfahrens hängt die Größe der Veränderung des Vergrößerungsfaktors von der Anzahl der abgrenzbaren Bereiche oder der Größe des Bereichs ab, bei denen bzw. bei dem die berührungsempfindliche Oberfläche der Anzeigefläche gleichzeitig bei dem Bedienvorgang und/oder der von dem Bedienvorgang bestimmten Bediensituation berührt wird. Wenn beispielweise die berührungsempfindliche Oberfläche mit zwei Fingerspitzen gleichzeitig berührt wird, kann der Vergrößerungsfaktor weiniger stark verkleinert werden, als wenn die berührungsempfindliche Oberfläche mit mehr als zwei Fingerspitzen gleichzeitig berührt wird. Ferner kann der Vergrößerungsfaktor überhaupt nicht verändert werden, wenn die berührungsempfindliche Oberfläche nur mit einer Fingerspitze berührt wird.

Bei einer Ausgestaltung des erfindungsgemäßen Verfahrens wird bei dem Bedienvorgang die berührungsempfindliche Oberfläche der Anzeigefläche oder der Bedieneinrichtung gleichzeitig bei zwei Bereichen berührt, wobei die Bereiche zum Vergrößern des Vergrößerungsfaktors voneinander weg bewegt werden und die Bereiche zum Verkleinern des Vergrößerungsfaktors aufeinander zu bewegt werden. Bei der Geste handelt es sich in diesem Fall um einen so genannten Multi-Touch-Zoom. Um in diesem Fall die Teilmenge der Listeneinträge bzw. Elemente möglichst schnell zu verändern, werden die beiden Bereiche, die auf der berührungsempfindlichen Oberfläche berührt werden, aufeinander zu bewegt, wodurch der Vergrößerungsfaktor verkleinert wird. Gleichzeitig bewirkt dieser Bedienvorgang, dass die angezeigte Teilmenge der Listeneinträge bzw. Elemente entsprechend dem neuen Vergrößerungsfaktor für den Bedienvorgang verändert wird.

Gemäß einer anderen Ausgestaltung des erfindungsgemäßen Verfahrens wird die Bediensituation von einem Bedienvorgang bestimmt, bei dem die berührungsempfindliche Oberfläche der Anzeigefläche oder der Bedieneinrichtung zum Verkleinern des Vergrößerungsfaktors gleichzeitig bei zwei Bereichen berührt. Zum Verändern der angezeigten Teilmenge der Listeneinträge bzw. Elemente werden beim Bedienvorgang die Bereiche auf der Oberfläche verschoben. Die in diesem Fall ausgeführte Geste des Bedienvorgangs entspricht einem so genannten Multi-Touch-Drag. Die gleichzeitige Berührung der Oberfläche der Anzeigefläche oder der Bedieneinrichtung wird als Bediensituation interpretiert, die zu einer Verkleinerung des Vergrößerungsfaktors führt. Die Länge des Verschiebens der Bereiche bewirkt eine Veränderung der angezeigten Teilmenge der Listeneinträge bzw. Elemente, deren Größe von dem für den Bedienvorgang bestimmten verkleinerten Vergrößerungsfaktor sowie der Länge des Verschiebens der Bereiche abhängt. Wird wie vorstehend beschrieben beispielsweise eine Teilmenge einer Liste angezeigt, kann die Liste mit zwei Fingern berührt und in Richtung der Listeneinträge verschoben werden, die angezeigt werden sollen.

Gemäß einer anderen Ausgestaltung des erfindungsgemäßen Verfahrens wird beim Bedienvorgang ein mechanisches Bedienelement betätigt. In diesem Fall kann die Bediensituation von einem Bedienvorgang bestimmt werden, bei dem das mechanische Bedienelement mit einer schnellen Bewegung betätigt wird. Falls beim Bedienvorgang wie vorstehend erläutert eine berührungsempfindliche Oberfläche der betätigt wird, kann die Bediensituation von einem Bedienvorgang bestimmt werden, bei dem eine schnelle Bewegung über die berührungsempfindliche Oberfläche der Anzeigefläche ausgeführt wird. Unter einer "schnellen Bewegung" wird in diesem Fall eine bestimmte Betätigungsbewegung verstanden, die innerhalb einer vorgegebenen Zeit, wie z. B. 100 ms, ausgeführt wird. Handelt es sich bei dem mechanischen Bedienelement beispielsweise um einen Drehsteller, liegt eine schnelle Betätigung des Drehstellers dann vor, wenn eine definierte Anzahl an Inkrementen des Drehstellers innerhalb einer vorgegebenen Zeit durchlaufen worden ist. Eine solche schnelle Bewegung wird bei dem erfindungsgemäßen Verfahren als eine Bediensituation interpretiert, die zu einer Veränderung des Vergrößerungsfaktors für den Bedienvorgang führt. Das Maß der Veränderung des Vergrößerungsfaktors kann dabei von dem Geschwindigkeit oder der Frequenz der Betätigung beim Bedienvorgang abhängen.

Gemäß einer anderen Ausgestaltung kann die Bediensituation von einem Bedienvorgang bestimmt werden, bei dem das mechanische Bedienelement oder die berührungsempfindliche Oberfläche der Anzeigefläche oder der Bedieneinrichtung bei einem Bereich für eine lange Zeitdauer betätigt werden. Unter einer "langen Zeitdauer" wird in diesem Fall verstanden, dass die berührungsempfindliche Oberfläche bzw. das Bedienelement länger als ein vorgegebenes Zeitintervall von z. B. 100 ms betätigt wird. Eine solche Betätigung wird dann als Bediensituation interpretiert, die zu einer Veränderung des Vergrößerungsfaktors für den Bedienvorgang führt. Das Maß der Veränderung des Vergrößerungsfaktors kann dabei von der Dauer der Betätigung abhängen

Gemäß einer weiteren Ausgestaltung des erfindungsgemäßen Verfahrens wird die bei dem Bedienvorgang vom Nutzer ausgeübte Kraft detektiert und die Bediensituation, die zu der Veränderung des Vergrößerungsfaktors führt, hängt von der beim Bedienvorgang vom Nutzer ausgeübten Kraft ab. Es kann beispielsweise die Kraft detektiert werden, die bei der Berührung des Touchscreens oder des Touchpads ausgeübt wird. Ferner kann die Kraft detektiert werden, die bei der Betätigung eines mechanischen Bedienelements vom Nutzer auf dieses Element ausgeübt wird. Überschreitet diese Kraft einen bestimmten Schwellwert, wird dies als eine Bediensituation interpretiert, bei welcher der Vergrößerungsfaktor verändert, insbesondere verkleinert, wird. Des Weiteren kann die Kraft den Bedienvorgang selbst bestimmen. In Abhängigkeit von der Größe der Kraft wird bestimmt, um welche Größe sich die angezeigte Teilmenge der Listeneinträge bzw. Elemente verändert.

Bei dieser Ausgestaltung des erfindungsgemäßen Verfahren kann der Nutzer ferner die Geschwindigkeit, mit der sich die angezeigte Teilmenge der Listeneinträge bzw. Elemente ändert, über die Kraft steuern, mit welcher er die Bedieneinrichtung betätigt. Hierdurch kann somit die Bediendauer weiter verkürzt werden. Außerdem ist die Steuerung der Geschwindigkeit, mit der sich die angezeigte Teilmenge ändert, über die auf die Eingabevorrichtung ausgeübte Kraft für den Nutzer intuitiv verständlich, so dass der Bedienvorgang für den Nutzer sehr einfach durchgeführt werden kann.

Falls man des Weiteren die Fläche berücksichtigt, auf welche die Kraft vom Nutzer ausgeübt wird, kann auch der beim Bedienvorgang ausgeübte Druck detektiert werden und die Geschwindigkeit, mit der sich die angezeigte Teilmenge der Listeneinträge bzw. Elemente verändert, hängt in diesem Fall von dem ausgeübten Druck ab. Im Folgenden wird daher nicht zwischen den Größen *Druck* und *Kraft* im Einzelnen unterschieden.

Die Geschwindigkeit, mit der die angezeigte Teilmenge der Listeneinträge bzw. Elemente verändert wird, ist insbesondere um so höher, desto größer die vom Nutzer bei der Bedienung ausgeübte Kraft ist. Der Nutzer kann somit die Geschwindigkeit erhöhen, indem er stärker auf die Bedieneinrichtung drückt.

Gemäß einer Ausgestaltung des erfindungsgemäßen Verfahrens wird die bei dem Bedienvorgang ausübbare Kraft in Bereiche unterteilt. Die Geschwindigkeit, mit der die angezeigte Teilmenge verändert wird, hängt in diesem Fall vom Bereich ab, in welchen die ausgeübte Kraft fällt. Die Geschwindigkeit wird in diesem Fall somit schrittweise bei Überschreiten bestimmter Schwellenwerte verändert.

Gemäß einer anderen Ausgestaltung hängt die Geschwindigkeit, mit der die angezeigte Teilmenge verändert wird, von der ausgeübten Kraft in folgender Weise ab:

$$v = F \cdot D \quad ,$$

wobei v die Geschwindigkeit, F die ausgeübte Kraft und D ein Dämpfungsfaktor ist. Zwischen der ausgeübten Kraft und der Geschwindigkeit, mit der die angezeigte Teilmenge der Listeneinträge bzw. Elemente verändert wird, besteht somit ein linearer Zusammenhang.

Gemäß einer anderen Ausgestaltung des erfindungsgemäßen Verfahrens wird die Bediensituation durch einen fahrspezifischen Parameter bestimmt. Beispielsweise kann die Geschwindigkeit des Fahrzeugs gemessen werden. Die Bediensituation hängt in diesem Fall von der Geschwindigkeit des Fahrzeugs ab. Beispielsweise kann der Vergrößerungsfaktor bei höheren Geschwindigkeiten um ein größeres Maß reduziert werden, so dass das Maß der Veränderung der angezeigten Information bei einem bestimmten Bedienvorgang größer ist als bei niedrigeren Geschwindigkeiten.

Die erfindungsgemäße Vorrichtung ist dadurch gekennzeichnet, dass mittels der Steuervorrichtung die Anzeigefläche so ansteuerbar ist, dass, wenn ein ausgewählter Listeneintrag zusammen mit zumindest einer Teilmenge der dem ausgewählten Listeneintrag zugeordneten Elementen angezeigt wird und der Bildlauf-Bedienvorgang mittels der Bedieneinrichtung ausgeführt wird, zunächst nacheinander vorhergehende oder nachfolgende Elemente auf der Anzeigefläche anzeigbar sind und danach zu dem ausgewählten Listeneintrag vorhergehende oder nachfolgende Listeneinträge anzeigbar sind.

Die erfindungsgemäße Vorrichtung ist insbesondere so ausgestaltet, dass sie die vorstehend beschriebenen Verfahrensschritte teilweise oder vollständig ausführen kann.

Gemäß einer Ausgestaltung der erfindungsgemäßen Vorrichtung umfasst die Bedieneinrichtung eine berührungsempfindliche Oberfläche. Diese Oberfläche kann Teil eines sogenannten Touchpads sein. Ferner kann die Oberfläche auf der Anzeigefläche ausgebildet sein, d. h. die Anzeigevorrichtung ist mit einem Touchscreen ausgestattet. Der Touchpad oder der Touchscreen kann insbesondere als Multi-Touchpad/Touchscreen ausgebildet sein, d. h. mit der berührungsempfindlichen Oberfläche ist die gleichzeitige Berührung bei verschiedenen Bereichen detektierbar. Die Größe des Bereichs kann sich dabei beispielsweise nach der Größe des Bereichs richten, welcher von der Berührung der Fingerspitze eines Nutzers eingenommen wird.

Ferner kann die Bedieneinrichtung ein mechanisches Bedienelement umfassen. Dieses Bedienelement ist z. B. ein mechanischer Drehsteller, ein Bedienelement, welches in zwei Dimensionen betätigbar ist, oder ein Joystick, um die angezeigte Teilmenge in verschiedenen Richtungen auf der Anzeigefläche zu verschieben.

Die Bedieneinrichtung kann ferner einen Sensor zum Erfassen der Betätigungsgeschwindigkeit des mechanischen Bedienelements, zum Erfassen der Dauer der Berührung des mechanischen Bedienelements und/oder zum Erfassen des Loslassens des mechanischen Bedienelements umfassen. Beispielsweise kann die Bedieneinrichtung eine infrarotbasierte oder kapazitive Berührungssensorik umfassen.

Die Bedieneinrichtung kann ferner eine drucksensitive Oberfläche umfassen, mit welcher die bei der Betätigung der Bedieneinrichtung ausgeübte Kraft detektierbar ist. Die Kraft kann beispielsweise resistiv oder kapazitiv detektiert werden. Gemäß einer Ausgestaltung der erfindungsgemäßen Bedieneinrichtung ist die drucksensitive Oberfläche auf einem Touchscreen oder einem Touchpad ausgebildet, so dass die Kraft ortsaufgelöst detektiert werden kann, d.h. es kann detektiert werden, an welcher Stelle und gegebenenfalls auf welcher Fläche die Kraft auf die berührungsempfindliche Oberfläche ausgeübt wird.

Die Erfindung wird nun anhand von Ausführungsbeispielen mit Bezug zu den Zeichnungen erläutert.

Figur 1      zeigt schematisch den Aufbau eines ersten Ausführungsbeispiels der erfindungsgemäßen Vorrichtung und die Koppelung dieser Vorrichtung mit anderen Einrichtungen des Fahrzeugs,

die Figuren 2A und 2B      zeigen Anzeigen der Anzeigevorrichtung gemäß einem Aspekt eines Ausführungsbeispiels des erfindungsgemäßen Verfahrens und

die Figuren 3 bis 5      zeigen weitere Anzeigen der Anzeigevorrichtung gemäß einem Ausführungsbeispiels des erfindungsgemäßen Verfahrens.

Die Vorrichtung zum Anzeigen von Information in einem Fahrzeug, insbesondere einem Kraftfahrzeug, umfasst eine Anzeigevorrichtung 1 mit einer Anzeigefläche 2, die so im Innenraum des Fahrzeugs angeordnet ist, dass sie von zumindest einem Fahrzeuginsassen, insbesondere dem Fahrer, gut sichtbar ist. Die Anzeigefläche 2 kann von einem Display, insbesondere einem Flüssigkristalldisplay, beliebiger Bauart bereitgestellt werden. Die Anzeigevorrichtung ist mit einer Steuervorrichtung 3 gekoppelt.

Die Steuervorrichtung 3 erzeugt Grafikdaten, die mittels der Anzeigevorrichtung 1 angezeigt werden können. Die Steuervorrichtung 3 ist hierfür mit einem Speicher 4 zum Speichern von Daten verbunden. Die Daten umfassen insbesondere in Listen geordnete Information. Die Liste umfasst eine Vielzahl von Listeneinträgen. Eine Teilmenge der Listeneinträge kann auf der Anzeigefläche 2 der Anzeigevorrichtung 1 angezeigt werden, wie es später erläutert wird. Ferner umfassen die Daten für zumindest einen Teil der Listeneinträge Elemente, die dem jeweiligen Listeneintrag zugeordnet sind. Einem bestimmten Listeneintrag können somit beispielsweise mehrere Elemente zugeordnet sein. Die Informationen sind somit in einer hierarchischen Struktur gespeichert.

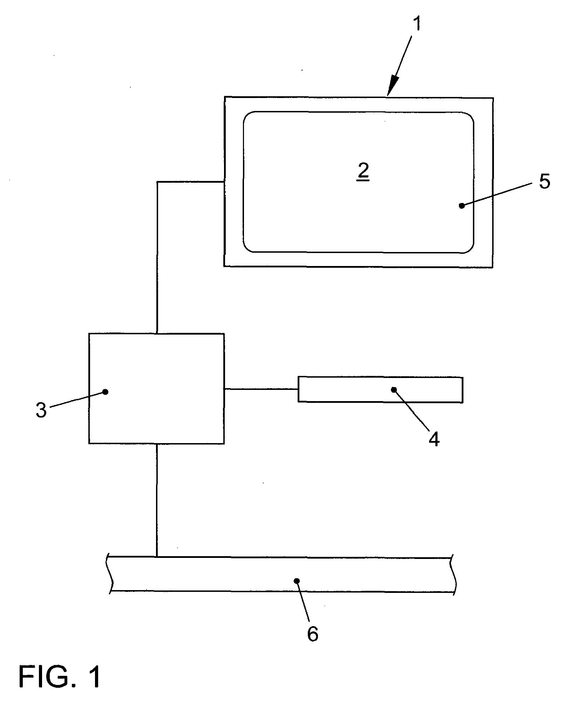

Die Steuervorrichtung 3 ist ferner Teil einer Bedieneinrichtung, die von einem Nutzer betätigbar ist, um die angezeigte Teilmenge der Listeneinträge bzw. Elemente durch einen Bedienvorgang zu verändern. Bei dem in Figur 1 gezeigten Ausführungsbeispiel umfasst die Bedieneinrichtung eine berührungsempfindliche Oberfläche 5 der Anzeigefläche 2. Die Anzeigevorrichtung 1 umfasst somit einen Touchscreen. Auf der berührungsempfindlichen Oberfläche 5 der Anzeigefläche 2 ist ferner insbesondere die gleichzeitige Berührung bei verschiedenen Bereichen detektierbar. Es handelt sich somit um einen so genannten Multi-Touchscreen.

Alternativ kann die berührungsempfindliche Oberfläche auch separat von der Anzeigefläche 2 vorgesehen sein. In diesem Fall umfasst die Bedieneinrichtung somit ein Touchpad.

Alternativ kann die Bedieneinrichtung ein mechanisches Bedienelement umfassen, das z. B. als Drehsteller ausgebildet sein kann. Das mechanische Bedienelement ist mit der Steuervorrichtung 3 gekoppelt. Die Steuervorrichtung 3 ist so ausgebildet, dass durch eine Betätigung der Oberfläche 5 der Anzeigefläche 2 bzw. des mechanischen Bedienelements die auf der Anzeigefläche 2 angezeigte Information vom Nutzer verändert werden kann. Durch eine Betätigung der berührungsempfindlichen Oberfläche 5 bzw. durch das mechanische Bedienelement kann der Nutzer insbesondere die angezeigte Teilmenge der Listeneinträge bzw. Elemente verändern.

Bei dem mechanischen Bedienelement kann es sich ferner um Tastschalter handeln, mit welchen Bewegungsrichtungen für die Veränderung der angezeigten Information gesteuert werden kann. Schließlich kann es sich bei dem mechanischen Bedienelement auch um einen digitalen oder analogen Joystick handeln.

Bei der Betätigung der berührungsempfindlichen Oberfläche 5 oder bei der Betätigung des mechanischen Bedienelements kann von der Steuervorrichtung 3 insbesondere die Betätigungsgeschwindigkeit, die Betätigungs- bzw. die Berührdauer sowie das Loslassen der Oberfläche 5 bzw. des Bedienelements detektiert werden. Die Steuervorrichtung 3 bzw. das mechanische Bedienelement umfassen hierfür entsprechende Sensoren. Es kann sich hierbei beispielsweise um eine infrarotbasierte oder kapazitive Berührungssensorik handeln. Des Weiteren kann bei einem mechanischen Bedienelement eine Translations- oder Winkelauslenkung detektiert werden.

Gemäß einem weiteren Ausführungsbeispiel umfasst die Bedieneinrichtung eine drucksensitive Oberfläche, mit welcher die bei der Betätigung der Bedieneinrichtung ausgeübte Kraft detektiert werden kann. Bei der drucksensitiven Oberfläche kann es sich um ein so genanntes Touchpad handeln. Ferner kann eine Oberfläche eines Bedienelements die drucksensitive Oberfläche umfassen. Schließlich kann die Anzeigefläche 2 der Anzeigevorrichtung 1 die drucksensitive Oberfläche aufweisen, so dass die Bedieneinrichtung in diesem Fall ein drucksensitiver Touchscreen ist.

Des Weiteren ist die Steuervorrichtung 3 mit einem Fahrzeugbus 6 gekoppelt, über welchen Daten mit vielfältigen Einrichtungen des Fahrzeugs ausgetauscht werden können. Insbesondere kann die aktuelle Fahrzeuggeschwindigkeit über den Fahrzeugbus 6 an die Steuervorrichtung 3 übertragen werden.

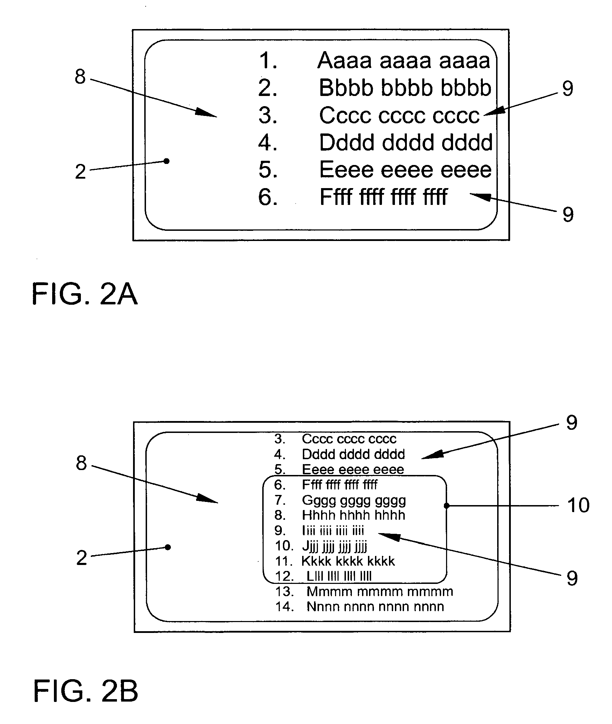

Im Folgenden wird mit Bezug zu den Figuren 2A und 2B erläutert, wie die angezeigte Teilmenge einer Liste bei einem Ausführungsbeispiel des erfindungsgemäßen Verfahrens bei einem Bildlauf verändert wird. Das Verfahren kann von der vorstehend beschriebenen Vorrichtung durchgeführt werden.

Dieses Ausführungsbeispiel betrifft die Anzeige einer Liste 8 mit einer Vielzahl von Listeneinträgen 9, von denen nur eine Teilmenge angezeigt wird. Ferner können zusätzlich, wie es später erläutert wird, Elemente angezeigt werden, die zu einem Listeneintrag 9 gehören. Die Anzahl der Listeneinträge 9 der angezeigten Teilmenge hängt von dem Vergrößerungsfaktor für die Anzeige der Liste 8 ab. Die Figur 2A zeigt den Fall, bei dem der Vergrößerungsfaktor so gewählt ist, dass auf der Anzeigefläche 2 insgesamt sechs Listeneinträge 9 der Liste 8 angezeigt werden. Die angezeigte Teilmenge kann nun durch einen Bedienvorgang eines Nutzers verändert werden. Der Nutzer kann insbesondere einen Bildlauf bzw. ein Scrollen hervorrufen. Dabei werden aufeinander folgend Anzeigebilder auf der Anzeigefläche 2 wiedergegeben, bei denen nacheinander Listeneinträge 9 verschwinden und andere Listeneinträge angezeigt werden. Erzeugt der Nutzer ausgehend von der Anzeige der Figur 2A beispielsweise einen Bildlauf nach unten, verschwindet zunächst der erste Listeneintrag 9 und nach dem sechsten Listeneintrag 9 erscheint der siebte Listeneintrag. Danach verschwindet der zweite Listeneintrag 9 und nach dem siebten Listeneintrag erscheint der achte Listeneintrag usw.

Die Größe bzw. die Geschwindigkeit des Bildlaufs hängt dabei zum einen von dem später beschriebenen Bedienvorgang ab und zum anderen von dem Vergrößerungsfaktor der angezeigten Information. Unter der Geschwindigkeit des Bildlaufs, d. h. der Veränderung der angezeigten Teilmenge, wird in diesem Fall verstanden, in welcher Zeiteinheit ein Listeneintrag verschwindet und dafür ein anderer Listeneintrag angezeigt wird. Dabei ist die Geschwindigkeit der Veränderung umso höher, je kleiner der Vergrößerungsfaktor ist, d. h. je kleiner die angezeigte Teilmenge der Gesamtinformation dargestellt wird, d. h. je mehr Listeneinträge 9 auf der Anzeigefläche 2 angezeigt werden.

Bei dem Ausführungsbeispiel des erfindungsgemäßen Verfahrens kann der Vergrößerungsfaktor für den Bedienvorgang, d. h. im vorliegenden Fall für den Bildlauf, in Abhängigkeit von einer später beschriebenen Bediensituation verändert. werden. Wird aus der Bediensituation von der Steuervorrichtung 3 ermittelt, dass beispielsweise der Vergrößerungsfaktor für den Bildlauf verkleinert werden soll, werden von der Steuervorrichtung 3 entsprechende Grafikdaten erzeugt, die dazu führen, dass auf der Anzeigefläche 2 die angezeigte Teilmenge der Gesamtinformation mit einem kleineren Vergrößerungsfaktor angezeigt wird. Dies führt üblicherweise dazu, dass die Teilmenge mehr Information enthält. Im vorliegenden Beispiel werden bei der Verringerung des Vergrößerungsfaktors mehr Listeneinträge angezeigt. In Figur 2B ist der Fall angezeigt, bei dem der Vergrößerungsfaktor für den Bildlauf so verkleinert wurde, dass zwölf Listeneinträge 9 angezeigt werden.

Da die Geschwindigkeit des Bildlaufs von dem Vergrößerungsfaktor abhängt, wird bei einem vorgegebenen Bedienvorgang nach der Verringerung des Vergrößerungsfaktors, wie er in Figur 2B dargestellt ist, ein schnellerer Bildlauf durchgeführt, als dies bei der in Figur 2A wiedergegebenen Darstellung der Fall wäre. In Abhängigkeit von einer Bediensituation kann der Nutzer somit mit einem bestimmten Bedienvorgang einen schnelleren Bildlauf hervorrufen und somit schneller durch die Liste 8 scrollen.

Nach Beendigung des Bedienvorgangs wird der Vergrößerungsfaktor wieder auf den ursprünglichen Wert zurückgesetzt, bei dem im vorliegenden Beispiel sechs Listeneinträge 9 von der Anzeigefläche 2 wiedergegeben werden. Um in der Darstellung mit dem verkleinerten Vergrößerungsfaktor, die in Figur 2B wiedergegeben ist, deutlich zu machen, welche Listeneinträge nach dem Zurücksetzen des Vergrößerungsfaktors angezeigt werden, wird bei der Darstellung mit dem verkleinerten Vergrößerungsfaktor ein Rahmen 10 angezeigt, welcher die nach dem Zurücksetzen des Vergrößerungsfaktors angezeigten Listeneinträge 9 enthält.

Im Folgenden werden verschiedene Bedienvorgänge beschrieben, welche zu einem Bildlauf der Liste 8 führen. Des Weiteren zeichnen sich diese Bedienvorgänge dadurch aus, dass sie auch die Bediensituation bestimmen, die dazu führt, dass sich der Vergrößerungsfaktor, nach welchem sich die Geschwindigkeit des Bildlaufs richtet, verändert, insbesondere verringert.

Ist die Anzeigevorrichtung 1 wie mit Bezug zu Figur 1 erläutert als Multi-Touchscreen ausgestaltet, kann es sich bei dem Bedienvorgang z. B. um einen so genannten Multi-Touch-Zoom handeln, bei dem der Nutzer die Oberfläche 5 der Anzeigefläche 2 gleichzeitig mit zwei Fingern berührt und die Bereiche, bei denen er die Oberfläche 5 berührt, voneinander entfernt (Zoom-in) oder aufeinander zu bewegt (Zoom-out). Die durch diese Multi-Touch-Geste erzeugte Eingabe kann den Vergrößerungsfaktor entweder stufenlos in Abhängigkeit von dem Maß wie weit die Bereiche aufeinander zu oder voneinander weg bewegt worden sind, verändern. Alternativ können mögliche Vergrößerungsfaktoren vorgegeben sein, welche in Abhängigkeit von dem Maß, wie weit die Bereiche voneinander weg oder aufeinander zu bewegt worden sind, ausgewählt werden.

Nach einem bestimmten Zeitintervall von z. B. drei Sekunden, innerhalb dessen keine manuelle Interaktion mit der berührungsempfindlichen Oberfläche 5 erfolgt ist, wird der Vergrößerungsfaktor wieder auf den ursprünglichen Wert zurückgesetzt. Gleichermaßen wird bei einer Auswahl eines Listeneintrags 9 die Darstellung wieder auf den ursprünglichen Vergrößerungsfaktor zurückgesetzt, wobei der ausgewählte Listeneintrag 9 zentral auf der Anzeigefläche 2 wiedergegeben wird und die dem ausgewähltem Listeneintrag 9 zugeordneten Elemente 7 angezeigt werden, wie es später erläutert wird.

Der Bildlauf innerhalb der Liste 8 kann entweder auch durch die Multi-Touch-Zoom-Geste hervorgerufen werden oder durch eine separate Betätigung der berührungsempfindlichen Oberfläche 5. Beispielsweise kann die Richtung (vertikal oder horizontal bzw. diagonal), in welcher die Bereiche, bei denen die Finger die berührungsempfindliche Oberfläche 5 berühren, aufeinander zu bewegt werden, derart von der Steuervorrichtung 3 interpretiert werden, dass ein Bildlauf nach oben oder nach unten in der Liste 8 erfolgen soll. Andererseits kann nach der Multi-Touch-Zoom-Geste eine Verschiebe-Geste auf der berührungsempfindlichen Oberfläche 5 ausgeführt werden, bei der der Nutzer die Fingerspitze nach oben oder nach unten über die berührungsempfindliche Oberfläche 5 führt, was zu einem Bildlauf nach oben oder nach unten führt. Führt der Nutzer beispielsweise seine Fingerspitze eine bestimmte Strecke auf der berührungsempfindlichen Oberfläche 5 nach unten, welche vertikal auf der Anzeigefläche 2 eine Länge hat, die z. B. drei Listeneinträgen entspricht, würde sich bei der Darstellung der Figur 2A die angezeigte Teilmenge der Liste 8 um drei Einträge verändern. Da sich bei dem erfindungsgemäßen Verfahren aber der Vergrößerungsfaktor, wie in Figur 2B gezeigt, für den Bildlauf verändert hat, führt in diesem Fall der gleiche Bedienvorgang, d. h. eine Bewegung der Fingerspitze auf der berührungsempfindlichen Oberfläche 5 um dieselbe Strecke, zu einer Veränderung der angezeigten Listeneinträge 9 um sieben Positionen, da bei dem verkleinerten Vergrößerungsfaktor, wie er in Figur 2B dargestellt ist, die entsprechende Strecke sieben Listeneinträgen 9 entspricht. Mit einer vorgegebenen Bedienbewegung des Bedienvorgangs kann der Nutzer somit einen sehr viel schnelleren Bildlauf erzeugen, da der Vergrößerungsfaktor für den Bedienvorgang verringert wurde. Gleichermaßen kann eine entsprechende Bedienbewegung beim Ausführen der Multi-Touch-Zoom-Geste zu einem entsprechend schnelleren Bildlauf führen.

Ferner ist es möglich, dass der Nutzer zum Erzeugen des Bildlaufs Schaltflächen auf der berührungsempfindlichen Oberfläche 5 berührt, bei der auf der Anzeigefläche 2 entsprechende Symbole für die Schaltflächen angezeigt werden. In diesem Fall kann sich die Größe bzw. die Geschwindigkeit der Veränderung der Teilmenge, d. h. die angezeigten Listeneinträge 9, in Abhängigkeit von der Dauer der Berührung dieser Schaltflächen verändern. Auch in diesem Fall führt eine bestimmte Betätigungsdauer der Schaltflächen bei dem erfindungsgemäßen Verfahren zu einem schnelleren Bildlauf, da für den Bildlauf der Vergrößerungsfaktor, wie in Figur 2B gezeigt, verkleinert wird.

Gemäß einem weiteren Beispiel wird als Bedienvorgang vom Nutzer auf der berührungsempfindlichen Oberfläche 5 der Anzeigefläche 2 eine so genannte Multitouch-Drag-Geste ausgeführt, bei der der Nutzer die berührungsempfindliche Oberfläche 5 gleichzeitig mit zwei Fingerspitzen berührt und die berührten Bereiche gleichzeitig in eine Richtung bewegt. Bei dem in den Figuren 2A und 2B gezeigten Beispiel kann der Nutzer beispielsweise einen Listeneintrag gleichzeitig mit zwei Fingern berühren und die beiden Fingerspitzen dann nach oben führen. In diesem Fall wird zum einen die gleichzeitige Berührung zweier Bereiche des Listeneintrags 9 als eine Bediensituation interpretiert, die zu einer Verkleinerung des Vergrößerungsfaktors führt. Hätte der Nutzer den Listeneintrag nur mit einem Finger berührt, würde sich der Vergrößerungsfaktor nicht verändern. Die Länge der Bewegung der beiden Fingerspitzen, welche die berührungsempfindliche Oberfläche 5 berühren, bestimmt zusätzlich zu dem Vergrößerungsfaktor die Größe bzw. das Maß der Veränderung der angezeigten Information, d. h. um wie viele Listeneinträge 9 sich die angezeigte Teilmenge der Liste 8 verändert. Lässt der Nutzer die berührungsempfindliche Oberfläche 5 der Anzeigefläche 2 wieder los, wird die Darstellung automatisch wieder auf den ursprünglichen Vergrößerungsfaktor zurückgesetzt.

Bei einem weiteren Beispiel wird von der Bedieneinrichtung nicht eine berührungsempfindliche Oberfläche 5 der Anzeigefläche 2 verwendet, sondern ein mechanisches Bedienelement. Beispielsweise kann zum Erzeugen eines Bildlaufs durch die Liste 8 ein Drehsteller verwendet werden. In diesem Fall kann als Bediensituation eine schnelle Drehung bzw. eine wiederholte schnelle Drehung des Drehstellers so von der Steuervorrichtung 3 interpretiert werden, dass sich der Vergrößerungsfaktor für die Darstellung der Liste 8 wie in Figur 2B gezeigt verkleinert. Unter einer schnellen Drehung wird in diesem Fall beispielsweise verstanden, dass innerhalb eines vorgegebenen Zeitintervalls von z. B. 100 ms zumindest eine definierte Anzahl an Inkrementen des Drehstellers durchlaufen wird. Aus dem Drehwinkel, mit welchem der Drehsteller gedreht wurde, kann die Anzahl der Listeneinträge, um welche sich die angezeigte Teilmenge der Liste 8 verändert, bestimmt werden. Dabei ist die Veränderung bei einem bestimmten Drehwinkel umso größer, je kleiner der Vergrößerungsfaktor für den Bildlauf ist. Beim Loslassen des Drehstellers, welches über eine infrarotbasierte oder kapazitive Berührungssensorik detektiert werden kann, oder beim Ausbleiben einer weiteren Interaktion über den Drehsteller innerhalb eines bestimmten Zeitintervalls von z. B. drei Sekunden, wird der Vergrößerungsfaktor automatisch auf den ursprünglichen Wert zurückgesetzt und die veränderte Teilmenge der Liste 8 wird auf der Anzeigefläche 2 angezeigt. Gleichermaßen wird bei der Auswahl eines Listeneintrags 9 der Vergrößerungsfaktor zurückgesetzt und der ausgewählte Listeneintrag wird zentral auf der Anzeigefläche 2 angeordnet.

Des Weiteren kann als Bediensituation ein sehr langes oder häufiges Drücken eines mechanischen Bedienelements oder einer virtuellen Schaltfläche, die auf der Anzeigefläche 2 mit einer berührungsempfindlichen Oberfläche 5 angezeigt wird, interpretiert werden. Wird beispielsweise ein mechanisches Bedienelement oder eine Schaltfläche während eines Zeitintervalls von z. B. 100 ms permanent betätigt oder innerhalb eines Zeitintervalls von z. B. einer Sekunde mehrmals betätigt, wird der Vergrößerungsfaktor für die Darstellung der Liste 8 entweder in diskreten Stufen oder analog zur Dauer der Interaktion verkleinert. Beim Loslassen des mechanischen Bedienelements oder bei einem Ausbleiben einer weiteren Interaktion über das Bedienelement für z. B. drei Sekunden, wird der Vergrößerungsfaktor automatisch wieder auf den Ausgangswert zurückgesetzt. Auch bei einer Auswahl eines Listeneintrags 9 wird der Vergrößerungsfaktor zurückgesetzt und der ausgewählte Listeneintrag 9 wird zentral auf der Anzeigefläche 2 angeordnet.

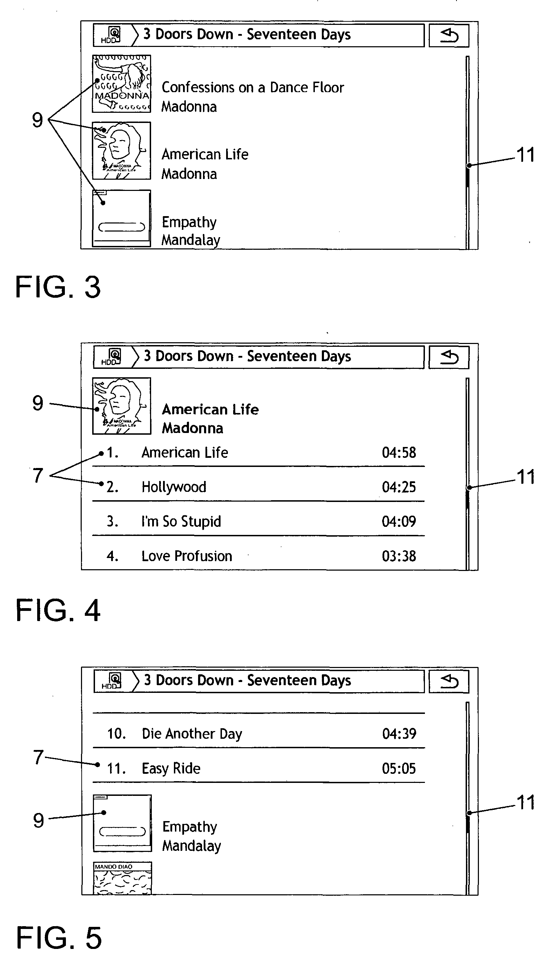

Bei einem weiteren Ausführungsbeispiel wird wie vorstehend erläutert die Bedieneinrichtung mit einer drucksensitiven Oberfläche 12 verwendet, wie sie beispielsweise in Fig. 3 gezeigt ist. In diesem Fall kann als Bediensituation ein besonders kräftiges Drücken eines der Bedienelemente 13 bis 16 interpretiert werden. Der Vergrößerungsfaktor für die Darstellung der Liste 8 wie in Fig. 2B gezeigt, verkleinert sich somit dann, wenn die auf die Bedienelemente 13 bis 16 ausgeübte Kraft einen bestimmten Schwellwert, der in dem Speicher 4 gespeichert sein kann, überschreitet. Nachdem der Vergrößerungsfaktor verändert wurde, wird die Liste beispielsweise bei der Betätigung eines ersten Bedienelements nach oben gescrollt oder bei der Betätigung eines zweiten Bedienelements nach unten gescrollt. Nach dem Loslassen der Bedienelemente wird der Vergrößerungsfaktor für die Darstellung der Liste 8 wieder auf den ursprünglichen Wert zurückgesetzt.

Bei diesem Beispiel kann das Maß, um welches der Vergrößerungsfaktor beim Überschreiten des Schwellwerts für die ausgeübte Kraft verändert wird, von der ausgeübten Kraft abhängen. Beispielsweise kann der Vergrößerungsfaktor umso mehr verkleinert werden, je größer die ausgeübte Kraft ist. Schließlich kann sich auch die Scrollgeschwindigkeit unabhängig von dem Überschreiten eines Schwellwerts nach der ausgeübten Kraft auf die Bedienelemente richten. Beispielsweise kann die Geschwindigkeit, mit der sich die angezeigte Teilmenge der Gesamtinformation verändert, wie folgt bestimmt werden:

In der Steuervorrichtung 3 wird die Kraft, die unter normalen Umständen auf die Bedieneinrichtung ausgeübt wird, in Bereiche unterteilt. Die Bereichsgrenzen stellen somit Schwellenwerte dar. Jedem Bereich wird ein Geschwindigkeitswert zugeordnet, so dass mit steigender Kraft die Geschwindigkeit in diskreten Schritten beim Überschreiten der Bereichsgrenzen erhöht wird. Beispielsweise kann die ausübbare Kraft in vier Bereiche unterteilt werden.

Alternativ kann sich die Geschwindigkeit auch linear mit der ausgeübten Kraft ändern, so dass folgender Zusammenhang gilt:

$$v = F \cdot D \quad ,$$

wobei $v$ die Geschwindigkeit, F die ausgeübte Kraft und D ein Dämpfungsfaktor ist, der in der Steuervorrichtung 3 bzw. dem Speicher 4 gespeichert ist.

Gemäß einer anderen Ausgestaltung dieses Ausführungsbeispiels ist die Bediensituation von dem Bedienvorgang unabhängig. Beispielsweise kann sich die Verringerung des Vergrößerungsfaktors nach der Fahrzeuggeschwindigkeit richten. Bei höheren Fahrzeuggeschwindigkeiten kann die Darstellung der Liste 8 stärker verkleinert werden, so dass eine bestimmte Bedienbewegung oder Bediendauer zu einer stärkeren Veränderung der angezeigten Teilmenge der Liste 8 führt. Wenn nämlich der Fahrer des Fahrzeugs den Bedienvorgang ausführt, ist es bei hohen Geschwindigkeiten besonders wichtig, dass er besonders schnell durch eine z. B. sehr lange Liste scrollen kann.

Im Folgenden wird mit Bezug zu den Fig. 3 bis 5 erläutert, wie sich die Anzeige auf der Anzeigefläche 2 verändert, wenn ein Listeneintrag 9 ausgewählt wird. Als Listeneinträge 9 sind in diesem Fall Musikalben verschiedener Künstler gewählt. Jedem Album sind dabei mehrere Lieder zugeordnet. Diese Lieder stellen die Elemente 7 dar, die jeweils einem bestimmten Listeneintrag 9 zugeordnet sind.

In Fig. 3 sind als Listeneinträge 9 drei Alben verschiedener Künstler angezeigt. Da in dem Speicher 4 noch weitere Alben gespeichert sind, wird nur Teilmenge einer Gesamtliste angezeigt. Die Listeneinträge 9 sind als auswählbare Schaltflächen ausgestaltet. Mittels der Leiste 11 am rechten Rand der Anzeigefläche 2 wird visualisiert, welche Teilmenge der Gesamtliste auf der Anzeigefläche 2 aktuell dargestellt wird. Durch einen Bildlauf-Bedienvorgang kann der Nutzer durch die Listeneinträge 9, d. h. die Musikalben der Gesamtliste, scrollen. Dabei kann das vorstehend beschriebene Verfahren angewandt werden, bei dem der Vergrößerungsfaktor für den Bildlauf verändert, insbesondere verkleinert, wird. Es ist jedoch auch möglich, dass der Bildlauf auf herkömmliche Weise, d. h. ohne Veränderung des Vergrößerungsfaktors, durchgeführt wird. Wird ein bestimmter Listeneintrag 9 ausgewählt, gelangt man zu der in Fig. 4 wiedergegebenen Anzeige auf der Anzeigefläche 2.

Der ausgewählte Listeneintrag 9, in diesem Fall das Album "American Life" der Künstlerin Madonna, wird weiterhin angezeigt. Ferner werden die zu diesem Listeneintrag 9 gehörigen Elemente 7, d. h. in diesem Fall die Lieder dieses Albums, angezeigt. Dabei wird nur eine Teilmenge der Elemente 7 angezeigt, da die Anzeigefläche 2 nicht für die Darstellung aller Elemente 7, die zu dem ausgewählten Listeneintrag 9 gehören, ausreicht. Um weitere Elemente 7 zur Anzeige zu bringen, kann der Nutzer einen Bildlauf nach unten erzeugen. Auch in diesem Fall kann das vorstehend beschriebene Verfahren angewandt werden, bei dem der Vergrößerungsfaktor für den Bildlauf verändert, insbesondere verkleinert, wird. Es ist jedoch auch möglich, dass der Bildlauf auf herkömmliche Weise, d. h. ohne Veränderung des Vergrößerungsfaktors, durchgeführt wird.

Wurde durch den Bildlauf-Bedienvorgang so weit hinunter gescrollt, dass das letzte Element 7 des ausgewählten Listeneintrags 9 angezeigt wird, wie dies in Fig. 5 dargestellt ist, wird unterhalb des letzten Elements 7 ein Listeneintrag 9 angezeigt, der auf den ausgewählten Listeneintrag 9 folgt. Die Gesamtliste wird somit bei der Anzeige der Elemente 7 eines ausgewählten Listeneintrags 9 nicht ausgeblendet, sondern um die Elemente 7 des ausgewählten Listeneintrags 9 erweitert, so dass ein Bildlauf sowohl die Listeneinträge 9, als auch die Elemente 7 eines ausgewählten Listeneintrags 9 durchläuft. Dabei werden die Listeneinträge und Elemente in einer linearen Darstellung aufeinander folgend angezeigt.

Erzeugt man ausgehend von der in Fig. 4 gezeigten Darstellung einen Bildlauf nach unten oder nach oben und wählt anschließend einen anderen Listeneintrag 9 aus, werden zum einen die Elemente dieses neu ausgewählten Listeneintrags 9 angezeigt und in die Gesamtliste eingefügt. Zum anderen werden die Elemente 7 des zuvor ausgewählten Listeneintrags 9 ausgeblendet, d. h. nicht mehr in der Gesamtliste angezeigt.

BEZUGSZEICHENLISTE

| 1 | Anzeigevorrichtung |
|---|---|
| 2 | Anzeigefläche |
| 3 | Steuervorrichtung |
| 4 | Speicher |
| 5 | berührungsempfindliche Oberfläche |
| 6 | Fahrzeugbus |
| 7 | Element |
| 8 | Liste |
| 9 | Listeneintrag |
| 10 | Rahmen |

11    Leiste

**Patentansprüche**

**1.** Verfahren zum Anzeigen von in Listen geordneter Information, bei dem

- auf einer Anzeigefläche (2) eine Teilmenge einer Liste (8) angezeigt wird, die eine Vielzahl von Listeneinträgen (9) umfasst, wobei den Listeneinträgen (9) zumindest zum Teil jeweils mehrere Elemente (7) zugeordnet sind,
- die angezeigte Teilmenge der Liste (8) durch einen Bildlauf-Bedienvorgang veränderbar ist, so dass nacheinander vorhergehende oder nachfolgende Listeneinträge (9) anzeigbar sind, und
- bei einer Auswahl eines Listeneintrags (9), dieser Listeneintrag (9) zusammen mit zumindest einer Teilmenge der dem Listeneintrag (9) zugeordneten Elemente (7) angezeigt wird,

**dadurch gekennzeichnet, dass**,

- wenn ein ausgewählter Listeneintrag (9) zusammen mit zumindest einer Teilmenge der dem ausgewählten Listeneintrag (9) zugeordneten Elemente (7) angezeigt wird und der Bildlauf-Bedienvorgang ausgeführt wird, zunächst nacheinander vorhergehende oder nachfolgende Elemente (7) angezeigt werden und danach zu dem ausgewählten Listeneintrag (9) vorhergehende oder nachfolgende Listeneinträge (9) angezeigt werden.

**2.** Verfahren nach Anspruch 1,
**dadurch gekennzeichnet,**
**dass** die Listeneinträge (9) und/oder die Elemente (7) in einer linearen Darstellung aufeinander folgend angezeigt werden.

**3.** Verfahren nach Anspruch 1 oder 2,
**dadurch gekennzeichnet,**
**dass** nach dem letzten Element (7) eines ausgewählten Listeneintrags (9) der dem ausgewählten Listeneintrag (9) nachfolgende Listeneintrag (9) angezeigt wird.

**4.** Verfahren nach einem der vorhergehenden Ansprüche,
**dadurch gekennzeichnet,**
**dass**, wenn ein ausgewählter Listeneintrag (9) zusammen mit zumindest einer Teilmenge der dem ausgewählten Listeneintrag (9) zugeordneten Elemente (7) angezeigt wird und anschließend ein anderer Listeneintrag (9) ausgewählt wird, der andere Listeneintrag (9) zusammen mit zumindest einer Teilmenge der dem anderen Listeneintrag (9) zugeordneten Elemente (7) angezeigt wird und die Elemente (7) des zuvor ausgewählten Listeneintrags (9) nicht mehr angezeigt werden.

**5.** Verfahren nach einem der vorhergehenden Ansprüche,
**dadurch gekennzeichnet,**
**dass** man durch den Bildlauf-Bedienvorgang durch die Listeneinträge und/oder die Elemente eines ausgewählten Listeneintrags (9) scrollt.

**6.** Verfahren nach einem der vorhergehenden Ansprüche,
**dadurch gekennzeichnet,**
**dass** die Anzahl der angezeigten Listeneinträge (9) und/oder Elemente (7) von einem Vergrößerungsfaktor abhängt, mit dem die Listeneinträge (9) und/oder Elemente (7) auf der Anzeigefläche (2) angezeigt werden, dass die Größe einer Veränderung der angezeigten Information bei dem Bildlauf-Bedienvorgang von dem Vergrößerungsfaktor der angezeigten Information abhängt und dass sich der Vergrößerungsfaktor für den Bedienvorgang in Abhängigkeit von einer Bediensituation verändert.

**7.** Verfahren nach Anspruch 6,
**dadurch gekennzeichnet,**
**dass** bei Beendigung des Bedienvorgangs der Vergrößerungsfaktor wieder auf den ursprünglichen Wert zurückgesetzt wird.

**8.** Vorrichtung zum Anzeigen von in Listen geordneter Information mit

- einer Anzeigevorrichtung (1) mit einer Anzeigefläche (2),
- einem Speicher (4) zum Speichern einer Liste (8), die eine Vielzahl von Listeneinträgen (9) umfasst, von der eine Teilmenge auf der Anzeigefläche (2) anzeigbar ist, und zum Speichern von Elementen (7), die den Listeneinträgen (9) zugeordnet sind,
- einer Bedieneinrichtung (5), die von einem Nutzer betätigbar ist, um die angezeigte Teilmenge der Liste (8) durch einen Bildlauf-Bedienvorgang zu verändern, wobei durch den Bildlauf-Bedienvorgang die Listeneinträge (9) der Liste (8) nacheinander durchlaufen werden, und
- einer Steuervorrichtung (3), die mit der Bedieneinrichtung (5) und der Anzeigevorrichtung (1) gekoppelt ist und mit welcher die auf der Anzeigefläche (2) wiedergegebene Anzeige steuerbar ist,

**dadurch gekennzeichnet, dass**

- mittels der Steuervorrichtung (3) die Anzeigefläche (2) so ansteuerbar ist, dass, wenn ein ausgewählter Listeneintrag (9) zusammen mit zumindest einer Teilmenge der dem ausgewählten Listeneintrag (9) zugeordneten Elemente (7) angezeigt wird und der Bildlauf-Bedienvorgang mittels der Bedieneinrichtung (5) ausgeführt wird, zunächst nacheinander vorhergehende oder nachfolgende Elemente (7) auf der Anzeigefläche (2) anzeigbar sind, und danach zu dem ausgewählten Listeneintrag (9) vorhergehende oder nachfolgende Listeneinträge (9) anzeigbar sind.

9. Vorrichtung nach Anspruch 8,
**dadurch gekennzeichnet,**
**dass** die Bedieneinrichtung eine berührungsempfindliche Oberfläche (5) umfasst.

**Claims**

1. Method for displaying information sorted in lists, in the case of which

- there is displayed on a display surface (2) a subset of a list (8) which comprises a multiplicity of list entries (9), the list entries (9) being respectively assigned a plurality of elements (7), at least in part,
- it is possible to change the displayed subset of the list (8) by a scrolling operation so that successively preceding or following list entries (9) can be displayed, and
- given a selection of a list entry (9), said list entry (9) is displayed together with at least a subset of the elements (7) assigned to the list entry (9),

**characterized in that**

- when a selected list entry (9) is displayed together with at least a subset of the elements (7) assigned to the selected list entry (9), and the scrolling operation is executed, firstly successively preceding or following elements (7) are displayed, and thereafter list entries (9) preceding or following in relation to the selected list entry (9) are displayed.

2. Method according to Claim 1, **characterized in that** the list entries (9) and/or the elements (7) are displayed succeeding one another in a linear representation.

3. Method according to Claim 1 or 2, **characterized in that** the list entry (9) following a selected list entry (9) is displayed after the last element (7) of the selected list entry (9).

4. Method according to one of the preceding claims, **characterized in that** when a selected list entry (9) is displayed together with at least a subset of the elements (7) assigned to the selected list entry (9) and another list entry (9) is subsequently selected, the other list entry (9) is displayed together with at least a subset of the elements (7) assigned to the other list entry (9), and the elements (7) of the previously selected list entry (9) are no longer displayed.

5. Method according to one of the preceding claims, **characterized in that** the scrolling operation scrolls through the list entries and/or the elements of a selected list entry (9).

6. Method according to one of the preceding claims, **characterized in that** the number of the displayed list entries (9) and/or elements (7) depends on an amplification factor with the aid of which the list entries (9) and/or elements (7) are displayed on the display surface (2), **in that** the extent of a change to the displayed information during the scrolling operation depends on the amplification factor of the displayed information, and **in that** the amplification factor for the operation varies as a function of an operating situation.

7. Method according to Claim 6, **characterized in that** the amplification factor is reset to the original value upon termination of the operation.

8. Device for displaying information sorted in lists, having

- a display device (1) with a display surface (2),
- a memory (4) for storing a list (8) which comprises a multiplicity of list entries (9) of which a subset can be displayed on the display surface (2), and for storing elements (7) which are assigned to the list entries (9),
- an operating device (5) which can be actuated by a user in order to change the displayed subset of the list (8) by a scrolling operation, the list entries (9) of the list (8) being run through sequentially by the scrolling operation, and
- a control device (3) which is coupled to the operating device (5) and the display device (1), and with which it is possible to control the display reproduced on the display surface (2),

**characterized in that**

- by means of the control device (3) the display surface (2) can be driven in such a way that when a selected list entry (9) is displayed together with at least a subset of the elements (7) assigned to the selected list entry (9), and the scrolling operation is executed by means of the operating device (5), firstly successively preceding or following elements (7) can be displayed on the display surface (2), and thereafter list entries (9) preceding or following in relation to the selected list entry (9) can be displayed.

9. Device according to Claim 8, **characterized in that** the operating device comprises a touch-sensitive surface (5).

**Revendications**

1. Procédé pour afficher des informations organisées en listes, avec lequel

- une partie d'une liste (8) est affichée sur une surface d'affichage (2), laquelle comprend une pluralité de lignes de liste (9), plusieurs éléments (7) étant à chaque fois associés au moins partiellement aux lignes de liste (9),
- la partie de liste (8) affichée peut être modifiée par une opération de commande de défilement d'image, de sorte que les lignes de liste (9) précédentes ou suivantes peuvent être affichées les unes après les autres, et
- lors d'une sélection d'une ligne de liste (9), cette ligne de liste (9) est affichée conjointement avec au moins une partie des éléments (7) associés à la ligne de liste (9),

**caractérisé en ce que**

- lorsqu'une ligne de liste (9) sélectionnée est affichée conjointement avec au moins une partie des éléments (7) associés à la ligne de liste (9) sélectionnée et que l'opération de commande de défilement d'image est exécutée, les éléments (7) précédents ou suivants sont tout d'abord affichés les uns après les autres et les lignes de liste (9) précédentes ou suivantes de la ligne de liste (9) sélectionnée sont affichées ensuite.

2. Procédé selon la revendication 1, **caractérisé en ce que** les lignes de liste (9) et/ou les éléments (7) sont affichés les uns à la suite des autres dans une représentation linéaire.

3. Procédé selon la revendication 1 ou 2, **caractérisé en ce que** la ligne de liste (9) qui suit la ligne de liste (9) sélectionnée est affichée après le dernier élément (7) d'une ligne de liste (9) sélectionnée.

4. Procédé selon l'une des revendications précédentes, **caractérisé en ce que** lorsqu'une ligne de liste (9) sélectionnée est affichée conjointement avec au moins une partie des éléments (7) associés à la ligne de liste (9) sélectionnée et qu'une autre ligne de liste (9) est ensuite sélectionnée, l'autre ligne de liste (9) est affichée conjointement avec au moins une partie des éléments (7) associés à l'autre ligne de liste (9) et les éléments (7) de la ligne de liste (9) sélectionnée précédente ne sont plus affichés.

**5.** Procédé selon l'une des revendications précédentes, **caractérisé en ce que** l'opération de commande de défilement d'image permet de parcourir les lignes de liste et/ou les éléments d'une ligne de liste (9) sélectionnée.

**6.** Procédé selon l'une des revendications précédentes, **caractérisé en ce que** le nombre de lignes de liste (9) et/ou d'éléments (7) affichés dépend d'un facteur de grossissement avec lequel les lignes de liste (9) et/ou les éléments (7) sont affichés sur la surface d'affichage (2), **en ce que** l'amplitude d'une modification des informations affichées lors d'une opération de commande de défilement d'image dépend du facteur de grossissement des informations affichées et **en ce que** le facteur de grossissement pour l'opération de commande varie en fonction d'une situation de commande.

**7.** Procédé selon la revendication 6, **caractérisé en ce que** lors de la fin de l'opération de commande, le facteur de grossissement est de nouveau rétabli à la valeur originelle.

**8.** Dispositif pour afficher des informations organisées en listes, comprenant

- un dispositif d'affichage (1) doté d'une surface d'affichage (2),
- une mémoire (4) pour enregistrer une liste (8), laquelle comprend une pluralité de lignes de liste (9), dont une partie peut être affichée sur la surface d'affichage (2), et pour enregistrer des éléments (7) qui sont associés aux lignes de liste (9),
- un dispositif de commande (5) qui peut être actionné par un utilisateur pour modifier la partie affichée de la liste (8) par une opération de commande de défilement d'image, les lignes de liste (9) de la liste (8) étant parcourues les unes après les autres par l'opération de commande de défilement d'image, et
- un dispositif de contrôle (3) qui est connecté au dispositif de commande (5) et au dispositif d'affichage (1) et avec lequel peut être contrôlé l'affichage reproduit sur la surface d'affichage (2),

**caractérisé en ce que**

- la surface d'affichage (2) peut être commandée à l'aide du dispositif de contrôle (3) de telle sorte que lorsqu'une ligne de liste (9) sélectionnée est affichée conjointement avec au moins une partie des éléments (7) associés à la ligne de liste (9) sélectionnée et que l'opération de commande de défilement d'image est exécutée au moyen du dispositif de commande (5), les éléments (7) précédents ou suivants peuvent tout d'abord être affichés les uns après les autres sur la surface d'affichage (2) et les lignes de liste (9) précédentes ou suivantes de la ligne de liste (9) sélectionnée peuvent être affichées ensuite.

**9.** Dispositif selon la revendication 8, **caractérisé en ce que** le dispositif de commande comprend une surface sensible au toucher (5).

FIG. 1

1. Aaaa aaaa aaaa
2. Bbbb bbbb bbbb
3. Cccc cccc cccc
4. Dddd dddd dddd
5. Eeee eeee eeee
6. Ffff ffff ffff ffff

8

9

2

9

FIG. 2A

3. Cccc cccc cccc
4. Dddd dddd dddd
5. Eeee eeee eeee
6. Ffff ffff ffff ffff
7. Gggg gggg gggg
8. Hhhh hhhh hhhh
9. Iiii iiii iiii iiii
10. Jjjj jjjj jjjj jjjj
11. Kkkk kkkk kkkk
12. Llll llll llll llll
13. Mmmm mmmm mmmm
14. Nnnn nnnn nnnn nnnn

8

9

2

10

9

FIG. 2B

**9** **11**

| | 3 Doors Down - Seventeen Days | ↰ |

Confessions on a Dance Floor
Madonna

American Life
Madonna

Empathy
Mandalay

## FIG. 3

**9** **7** **11**

| | 3 Doors Down - Seventeen Days | ↰ |

**American Life**
**Madonna**

| 1. | American Life | 04:58 |
| 2. | Hollywood | 04:25 |
| 3. | I'm So Stupid | 04:09 |
| 4. | Love Profusion | 03:38 |

## FIG. 4

**7** **9** **11**

| | 3 Doors Down - Seventeen Days | ↰ |

| 10. | Die Another Day | 04:39 |
| 11. | Easy Ride | 05:05 |

Empathy
Mandalay

MANDO DIAO

## FIG. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006032118 A1
- DE 19941956 A1
- DE 19941960 A1
- EP 0366132 B1
- DE 19944324
- DE 10324579 A1
- DE 102007034272 A1
- DE 102005020155 A1
- EP 1729207 A2